# EUROPEAN PATENT SPECIFICATION

(11) **EP 2 948 321 B1**
(45) Date of publication and mention of the grant of the patent: **04.03.2020**
(21) Application number: 14706080.0
(22) Date of filing: 10.01.2014
(51) Int. Cl.: B60C 11/03, B60C 11/12

(54) **METHOD FOR IMPROVING THE CONTROL OF THE ROAD-HOLDING OF A TYRE AND TYRE OBTAINED ACCORDING TO SAID METHOD**
VERFAHREN ZUR VERBESSERUNG DER STEUERUNG DES FAHRVERHALTENS EINES REIFENS UND IN DIESEM VERFAHREN HERGESTELLTER REIFEN
PROCÉDÉ POUR AMÉLIORER LA COMMANDE DE LA TENUE DE ROUTE D'UN PNEU ET PNEU OBTENU SELON LEDIT PROCÉDÉ

(30) Priority: 28.01.2013 IT PD20130016; 07.03.2013 US 201361773987 P
(43) Date of publication of application: 02.12.2015
(73) Proprietor: Pirelli Tyre S.p.A., 20126 Milano (IT)
(72) Inventor: TROMBIN, Andrea, I-20126 Milano (IT); MONTESELLO, Stefano, I-20126 Milano (IT); SANGALLI, Roberto, I-10036 Settimo Torinese (TO) (IT)
(74) Representative: Susanetto, Carlo
(86) International application number: PCT/IB2014/058178
(87) International publication number: WO 2014/115052

(56) References cited:
- EP-A1- 2 460 672
- EP-A1- 2 463 123
- WO-A1-2013/079385
- DE-A1- 3 942 043
- DE-A1-102007 061 148
- JP-A- H09 188 109
- US-A- 5 407 005
- US-A1- 2001 035 244
- US-B2- 7 360 569

## Description

The present invention relates to a method for manufacturing tyres, in particular winter tyres and studded tyres, which are capable of providing an increased level of control of the road-holding of the tyre during driving.

The invention further relates to a tyre, in particular a winter tyre or a studded tyre, manufactured in accordance with such a method.

A tyre generally comprises a carcass structure which is formed toroidally about an axis of rotation, to which structure there are applied, in a radially external position, a belt structure and, in a state further superimposed thereon, a tread band which is manufactured from elastomer material and on which a tread surface which is intended for contact with the road surface is defined.

The tread band is typically crossed by grooves which are formed in the surface thereof in accordance with a great variety of configurations which, together with the blocks which they delimit and define, generally form the tread pattern of the tyre.

It is known that the characteristics of the tread band, which is the component of the tyre in direct contact with the ground, principally determine the performance levels of the tyre in terms of road-holding both during acceleration phases and during braking and in the case of lateral grip.

For example, the provision and the configuration of the grooves on the tread surface, allowing any water present on the road surface to be discharged, improves the road-holding of the tyre on wet surfaces.

It is further known that the holding of a tyre on a snow-covered surface or icy surface is made particularly difficult by the reduced friction coefficient of the road surface.

In order to overcome, at least partially, this disadvantage, there are widely used so-called winter tyres which are characterized by the presence, on the blocks of the tread band, of a plurality of small notches, known as "sipes", which are capable of retaining on the tread surface a given quantity of snow which improves the adhesion with respect to the snow-covered road surface or, in particular, in countries with long and harsh winters, so-called studded tyres, that is to say, tyres on the tread band of which there are advantageously fixed metal elements, known as "studs", which are capable, by projecting over a suitable extent from the tread surface of the tyre, of cutting into the icy surface, thereby providing an adequate gripping action of the tyre even on this type of road surface.

A tyre is defined as being "directional" when it is configured so as to have a preferential direction of rolling, typically coincident with the direction of rotation of the tyre when it is mounted on a vehicle travelling forwards.

Consequently, there is identified on the tread surface of a directional tyre a "direction of advancement" which is tangential to the tread surface and which is directed in the preferential rolling direction of the tyre.

The terms "front side" and "rear side" when referring to blocks of a tread band are intended to refer to the side of the block which is substantially directed in the direction of advancement and counter thereto, respectively.

A block will be indicated to be "following" or "preceding" with respect to another block when it is located on the tread band downstream or upstream of the other block, respectively, with reference to the direction of advancement.

The term "equatorial plane" of the tyre is intended to refer to the axial centre plane which is perpendicular to the rotation axis of the tyre itself.

The term "central region" of the tread band is intended to refer to a region of the tread surface which is centred with respect to the equatorial plane of the tyre and which extends over an extent between 30% and 50% of the entire axial dimension (width) of the tread band, whilst the term "shoulder regions" are intended to identify the regions of the tread surface which extend from the axially opposite ends of the tread band as far as the central region. Those shoulder regions are therefore symmetrical with respect to the equatorial plane of the tyre and each extend over an extent between 25% and 35% of the total width of the tread band.

The terms "shoulder blocks" and "central blocks" are intended to refer to blocks which are arranged, at least over 80% of the surface thereof, in a shoulder region and in the central region of the tread band, respectively.

The term "intermediate blocks" is intended to refer to the blocks which do not fall within the preceding definition and which are axially interposed between said central blocks and said shoulder blocks.

The term "lateral rigidity" of the tread band or a region thereof is intended to refer to the capability for resisting deformations owing to a tangential stress applied to the tread surface having an axial direction.

In other words, the lateral rigidity of a first region of tread band will be considered to be greater than a second region of tread band if, when both regions are subjected to a shear stress having an axial component, for example, when the tyre is driven on bends, the blocks of the first region are strained to a lesser extent than the blocks of the second region.

The term "specific lateral rigidity" is intended to refer to the value of the lateral rigidity per unit of surface-area calculated at a location of the tread.

Consequently, the lateral rigidity of a portion of tread band from the values of specific lateral rigidity is calculated by integrating the specific lateral rigidity over the surface of the portion involved.

The term "groove" is intended to refer to a cut which is produced in the tread surface and which has a minimum width of about 1.5 mm and a minimum depth of about 5 mm.

However, the term "notch" is intended to refer to a cut which is produced in a portion of tread band and which has a width of from about 0.1 mm to about 1.5 mm and a depth of from about 1 mm to about 15 mm.

The term "sipe" is intended to refer to a notch which is formed in a block and which is capable of retaining snow when the tyre is driven on a snow-covered surface.

One or more blocks are considered "corresponding" to another block or to other blocks when the first ones are adjacent to the other ones and when the orthogonal projections in the equatorial plane of the first types and of the other types are superimposed over at least 50% of the extent of one or the other.

A stud is said to be in "edge position" when it is positioned on a block less than about 8 mm from an edge delimiting said block from a groove.

However, when a stud is positioned on a block more than about 8 mm from an edge delimiting said block from a groove, it is said to be in "middle position".

JP 2002283812 describes a non-studded winter tyre, on the tread band of which there are defined a plurality of central blocks which are arranged in succession along the entire circumferential development of the central region of the tread band, opposing pluralities of shoulder blocks, which are similarly arranged in succession over the entire circumferential development of the opposing shoulder regions of the tread band. There is further provided between each shoulder block and each central block an intermediate block corresponding thereto.

Each of DE 102007061148, EP 2463123 and EP 2460672 discloses a winter tyre whose tread band is provided with a plurality of central blocks, a plurality of intermediate blocks as well as a plurality of shoulder blocks.

A tyre corresponding with the features of the preamble of claim 1 is known from JP H09 188109 A.

The Applicant has preliminarily observed that one of the most critical aspects during the operation of driving a tyre, in particular on a road surface which is covered in snow or ice, is the holding of the tyre on bends, where it tends to skid sideways owing to the axial tangential stresses.

The Applicant has particularly observed that, on bends, the support of the tread band on the road surface is not homogeneous with the external shoulder (with respect to the bend) being more compressed against the road surface and the internal shoulder being unloaded to a greater extent, bringing about a lesser contribution of the internal shoulder to the holding of the tread band on the road surface. By way of simplification, it is as if on a bend a portion of internal shoulder were to be missing so that the tangential stress to which the tread band is subjected has to be taken up only by the remaining tread band. That remaining tread band may further be more readily deformed because the total lateral rigidity of the tread band cannot withstand the rigidity of the portion of unloaded internal shoulder.

The Applicant has further observed that the portion of internal shoulder which is unloaded and which is therefore virtually excepted from the general calculation of the rigidity of the tread band substantially depends on the velocity, for a bend and conditions of the vehicle which are the same, at which the bend itself is driven round.

The Applicant has verified how, on road surfaces which are wet or dry and at normal speeds in such conditions of a road surface, in order to have good performance levels of road-holding on bends, a tyre must have relatively high values of lateral rigidity of the tread band.

However, the Applicant has verified that, on bends on road surfaces which are covered with snow or ice, a tyre having such lateral rigidity values in respect of the tread band tends to reach the limit of lateral holding of the tyre without providing the driver with any indication about the approach of that critical situation, risking loss of the complete adhesion on a bend in an unexpected manner.

The Applicant considers that this is because, on a surface which is covered with snow or ice, the loss of lateral adhesion owing to a lack of friction already occurs at reduced speeds, at which the unloaded internal shoulder portion is relatively limited, so that the tread band maintains a total lateral rigidity which is sufficiently high so as not to involve substantial deformations.

On the basis of these analyses, the Applicant has therefore perceived that, by advantageously configuring the blocks present in the various regions of the tread band so as to obtain a tyre having an advantageously different, specific lateral rigidity, it was possible to determine substantial variations in the total lateral rigidity of the tread band even on bends travelled at reduced speeds without, however, compromising the capacity thereof for general holding on dry or wet surfaces.

The Applicant has therefore found that a tyre whose specific lateral rigidity values were decreasing from the axial ends of the tread band as far as the equatorial plane, with suitable relationships between the minimum value and the maximum value of specific lateral rigidity, becomes capable of slight yielding in conditions of bend which, even at reduced speeds, may warn the driver of the approaching limit of adhesion of the tyre before that limit is effectively reached, even on road surfaces which are covered with snow and ice.

In particular, in a first aspect, the invention relates to a tyre according to claim 1.

The Applicant considers that a tyre having a tread pattern configured in this manner has a substantial reduction in the total lateral rigidity even at reduced portions of unloaded shoulder and that, however, the total rigidity decreases more slowly with an increase in the portion of unloaded shoulder.

This makes it possible to have a deformation of the tread band which indicates to the driver the approach of the condition of losing adhesion even under conditions where a bend is travelled at low speeds, which is particularly advantageous in the case of a surface covered with snow or ice, without compromising the general road-holding in the case of bends travelled at higher speeds, as in the case of a dry or wet road surface. In this way, the driver is informed of the approach of the limit of loss of adhesion on the road surface even on a surface which is covered with snow or ice and allowing him to bring about the suitable corrections to his driving before incurring in a loss of control of the vehicle.

The present invention, in at least one of the above-mentioned aspects, may have at least one of the preferred features set out below.

According to a preferred embodiment, each shoulder block is configured in order to extend in a prevailing longitudinal direction having an inclination with respect to a circumferential direction of said tread band between about 70° and about 90°.

In this configuration, the shoulder blocks confer a high level of lateral rigidity on the shoulder region.

Preferably, each intermediate block is configured in order to extend in a prevailing longitudinal direction having an inclination with respect to a circumferential direction of said tread band between about 10° and about 40°.

Preferably, each central block is configured in order to extend in a prevailing longitudinal direction having an inclination with respect to a circumferential direction of said tread band between about 10° and about 40°.

Owing to these characteristics, the central region of the tread band has a relatively low lateral rigidity and, conversely, a relatively high rigidity in a circumferential direction.

Preferably, each intermediate block is configured in order to extend circumferentially between a pair of shoulder blocks adjacent thereto.

Preferably, a transverse notch extends through each intermediate block.

Preferably, said notch is substantially in alignment with a groove which separates the shoulder blocks of said pair.

In this manner, the intermediate blocks have specific rigidity values, both lateral and circumferential, which are intermediate between the characteristics of the shoulder blocks and the central blocks, so as to obtain a continuous and progressive trend of those values between the shoulder region and the central region of the tread band.

Preferably, said central blocks extend in a longitudinal direction between a front side, directed in a direction of advancement of said tyre, and an opposite rear side, said front side extending by a measure at least 50% greater than said rear side.

In a greatly preferred manner, said front side has an extent between 150% and 250% of the extent of said rear side.

In this manner, the central blocks have a front portion for gripping the road surface that is particularly large in the direction of advancement.

In a preferred embodiment, said central blocks are provided as an alternating succession of first central blocks and second central blocks, which mainly extend in a first longitudinal direction and a second longitudinal direction different from said first longitudinal direction, respectively.

According to a preferred characteristic, said first and second longitudinal directions are inclined at opposite sides with respect to a circumferential direction which is defined on said tread band.

It is further preferable for said first and second longitudinal directions to be inclined in a substantially symmetrical manner with respect to said circumferential direction.

In this manner, there is obtained a "herringbone" arrangement of the central blocks which have the front side thereof inclined with respect to the direction of advancement so as to provide a front portion in the event of bends having a large radius, both to the right and to the left, thereby improving the road-holding not only on a snow-covered surface but also on a wet or dry surface.

Preferably, said front side of each central block faces a lateral side of a central block which follows it.

In this manner, the adjacent central blocks are circumferentially offset relative to each other so as to be only partially overlapping in the axial direction. This brings about greater rigidity in the circumferential direction of the central region of the tread band.

Preferably, each intermediate block extends in a longitudinal direction substantially parallel with a longitudinal direction, in which said corresponding central block, adjacent to said intermediate block, extends.

In this manner, the action of the central bocks is reinforced by the presence of the corresponding intermediate blocks without, however, bringing about excessive stiffening of the central region of the tread band.

Preferably, each intermediate block extends in a longitudinal direction between a front side directed in a direction of advancement of said tyre and an opposite rear side, said front side extending to a greater extent than said rear side.

In this manner, the intermediate blocks have a front portion for gripping the road surface that is particularly large in the direction of advancement of the tyre.

Preferably, there corresponds to each central block an intermediate block which extends in a longitudinal direction between a front side which is directed in a predefined direction of advancement of said tyre and an opposite rear side, said front side of said intermediate block facing a rear side of a central block which follows said central block corresponding to said intermediate block.

Preferably, each intermediate block corresponding to a central block of said first or second plurality comprises a lateral side which faces said pair of shoulder blocks, on which there is defined a first portion which is contiguous with a front side of said intermediate block and which is inclined at an angle between 70° and 90° with respect to the longitudinal direction of a central block of said second or first plurality.

In a greatly preferred manner, there is defined on said lateral side of said intermediate block a second portion which is spaced apart and substantially parallel with said first portion of said lateral side.

Preferably, there are formed on said tread band continuous transverse grooves which are open at the opposite axial ends of said tread band.

In this manner, the capacities for discharging water from the tread band are improved, increasing the road-holding on wet road surfaces.

Preferably, said continuous transverse grooves are of generally S-like form with opposing end portions delimiting shoulder blocks and a middle portion delimiting intermediate blocks and central blocks.

This type of formation, in addition to defining the central, intermediate and shoulder blocks in the manners described above, allows the rapid discharge of water from the tread band from the central region towards the axial ends of the tread band.

Preferably, said tread band is not provided with any continuous circumferential grooves.

That characteristic allows better performance levels to be obtained on winter road surfaces.

Preferably, each shoulder block extends from an axial end of said tread band towards said central region in a longitudinal direction and there are formed on each shoulder block a plurality of sipes which extend parallel with said longitudinal direction.

In this manner, the tyre has better adhesion to the snow-covered surface.

Preferably, an axially external portion of said sipes is formed inside respective cuts which are formed in said shoulder block.

In this manner, additional front portions for gripping the road surface are provided on the shoulder blocks.

Preferably, the axially internal end portions of said sipes are formed inside respective cuts which are formed in the shoulder block and which open at a groove delimiting said shoulder block.

This allows better retention of the snow in the region of the shoulder block, the provision of additional front portions for gripping the road surface and a reduction in the rigidity of the shoulder block in the region of the axially internal longitudinal end thereof.

Preferably, each intermediate block extends in a longitudinal direction and there are formed on each intermediate block a plurality of sipes which extend perpendicularly to said longitudinal direction.

In this manner, on bends the sipes are in a direction almost perpendicular to the direction of the tyre, improving the performance levels of the road-holding.

In a greatly preferred manner, the end portions of said sipes which face a corresponding central block are formed inside respective cuts which are open at a groove which separates said central block and said intermediate block.

This allows better retention of the snow, the provision of additional front portions for gripping the road surface and a reduction in the rigidity of the intermediate block in the region of the axially internal sidewall thereof.

In a preferred embodiment, a transverse notch extends through each intermediate block.

In a greatly preferred manner, said transverse notch is substantially in axial alignment with a groove which separates the shoulder blocks of said pair.

Preferably, a sipe is formed in said transverse notch.

In a preferred form of the invention, each central block extends in a longitudinal direction and a first plurality of sipes which extend perpendicularly to said longitudinal direction are formed on each central block.

Preferably, a second plurality of sipes of curvilinear form are formed on each central block, each sipe comprising a first portion substantially perpendicular to said longitudinal direction and a second portion connected to said first portion and substantially perpendicular to the longitudinal direction of a central block which follows said central block.

In a greatly preferred manner, said first plurality of sipes are formed in a portion of said central block so as to be axially aligned with a central block preceding it, and said second plurality of sipes are formed in a portion of said central block so as to be axially aligned with a central block following it.

In this manner, there is defined substantial continuity over the extent of the sipes between adjacent central blocks, obtaining greater uniformity of the central blocks in the retention of snow.

Preferably, the end portions of said sipes facing a corresponding intermediate block are formed inside respective cuts which open in a groove which separates said central block and said intermediate block.

This allows better retention of the snow, the provision of additional edges for gripping the road surface and a reduction in the rigidity of the central block.

Preferably, said sipes are formed so as to define on each block portion separated therefrom a first surface which faces the other block portion and which extends from the top of the sipe as far as an intermediate depth thereof, which has a profile having a substantially rectilinear or undulating extent, and a second surface which faces the other block portion and which is connected to the first surface and extends from the intermediate depth as far as the bottom of the sipe, which has a profile having a respective substantially undulating or rectilinear extent.

This allows rigidity values which are higher to be obtained and the characteristics of adhesion of the tyre to snow-covered surfaces to be better maintained over time.

Preferably, the sipes of each central block are substantially in alignment with the sipes of said corresponding intermediate block.

In this manner, there is defined substantial continuity over the extent of the sipes between adjacent central blocks and intermediate blocks, obtaining greater uniformity of the blocks of the central region of the tread band in the action of retention of snow.

In a preferred embodiment of the invention, each pair of said shoulder blocks, together with said intermediate block and said central block corresponding thereto, define a pitch of said tread band and, for each pitch, at least two axially staggered studs are provided on said tread band.

In this manner, continuity of action of the grip of the studs on ice-covered surfaces is ensured.

Preferably, said pitches are provided in differently alternating succession along the circumferential development of said tread band and comprise at least one short pitch, having a first circumferential dimension, and at least one long pitch, having a second circumferential dimension greater than said first circumferential dimension, a stud for each half-pitch of said short pitch being provided at said short pitch.

Owing to this characteristic, the studs are distributed over the tread band in a substantially regular manner.

Preferably, there are provided at said short pitch a stud in an edge position and a stud in a middle position.

The Applicant believes that the stud in an edge position initiates the gripping action thereof with respect to the road surface before a stud in a middle position, owing to the deformation to which the block on which it is positioned at the time at which it is introduced into the impression region is subjected. In turn, the stud in a middle position, since it is positioned in a more rigid region of the block, is capable of transmitting with greater efficiency the stresses to the road surface. The alternating positioning between studs in an edge position and studs in a middle position on the short pitch of the tread band allows a homogeneous and balanced action to be obtained on the ice-covered road surface.

Preferably, with reference to a predefined direction of advancement of said tyre, said stud in an edge position is at a half-pitch which is more advanced with respect to said stud in a middle position.

Preferably, said pitches are provided in a differently alternating succession along the circumferential development of said tread band and comprise at least one short pitch having a first circumferential dimension and at least one long pitch having a second circumferential dimension greater than said first circumferential dimension, at least one stud for each half-pitch of said long pitch being provided at said long pitch.

Preferably, a stud in an edge position and a stud in a middle position are provided at said long pitch.

Preferably, with reference to a predefined direction of advancement of said tyre, said stud in an edge position is at a half-pitch which is more retracted with respect to said stud in a middle position.

The alternating positioning between studs in an edge position and studs in a middle position on the pitch over the tread band allows a homogeneous and balanced action to be obtained on the ice-covered road surface.

The characteristics and advantages of the invention will be appreciated more clearly from the detailed description of some preferred embodiments thereof which are illustrated by way of non-limiting example with reference to the appended drawings, in which:
- Figure 1 is a schematic perspective view of a first embodiment of a tyre manufactured in accordance with the method of the present invention,
- Figure 2 is a schematic view, developed in a plane, of a significant portion of the tread band of the tyre of Figure 1;
- Figure 3 is a graph setting out the progression of the specific lateral rigidity values of the locations of the tread band of the tyre of Figure 1 as a function of the distance thereof from the equatorial plane;
- Figure 4 is a schematic view, developed in a plane, of a significant portion of the tread band of a second embodiment of a tyre manufactured in accordance with the method of the present invention.

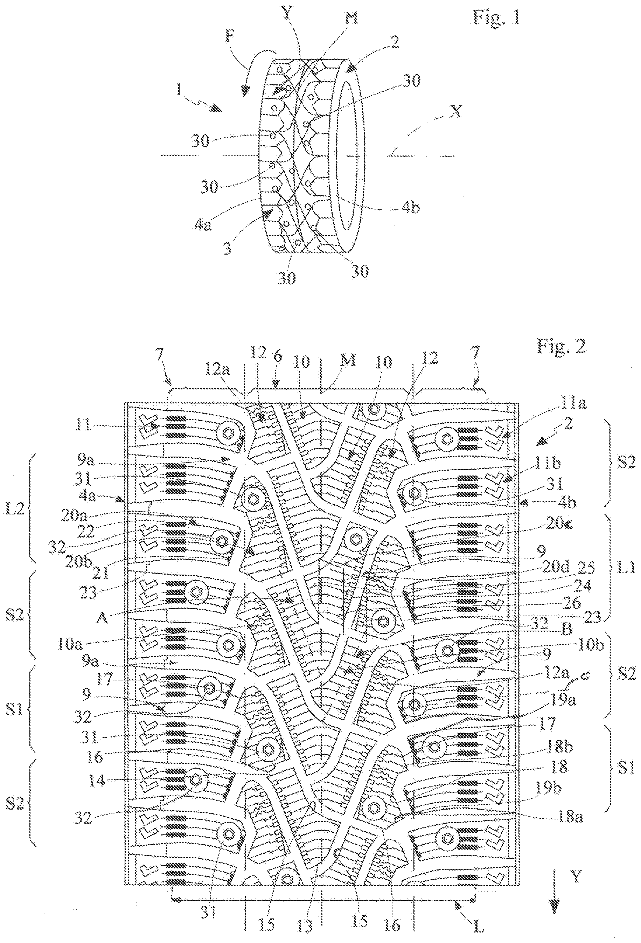

With reference to Figures 1 and 2, there is generally designated 1 a tyre which is manufactured in accordance with the method of the present invention.

The tyre 1 generally comprises a tread band 2 which is configured toroidally about an axis of rotation X of the tyre 1 which is arranged in a radially external position on a belt structure of the tyre 1. In turn, the belt structure of the tyre 1 is connected in a radially external position to a carcass structure, in accordance with a configuration which is known per se in the technical field of reference and which is not illustrated in the appended Figures.

The tread band 2 is manufactured from elastomer material and there is defined thereon a tread surface 3 which is radially external and which is intended for the contact of the tyre 1 with the road surface during the rolling movement thereof about the axis X.

The tyre 1 is preferably of the directional type so that there is determined a preferential direction of rolling thereof, which is designated F in Figure 1. In this manner for each location of the tread surface 3, there is defined a direction of advancement Y which is tangential to the tread surface 3 and which is orientated in the rolling direction F.

Two opposing axial ends 4a and 4b are defined on the tread band 2, as is an equatorial plane M which subdivides the aforesaid tread band 2 into two equidimensional portions.

There are further defined on the tread band 2 a central region 6 which extends circumferentially and symmetrically with respect to the equatorial plane M, and two shoulder regions 7 which are axially opposite and which extend from the central region 6 as far as the axial ends 4a and 4b.

The central region 6 has an axial dimension equal to about 40% of the total axial dimension (width) L of the tread band 2 and consequently the shoulder regions 7 have an axial dimension equal to about 30% of the width L of the tread band 2.

There are formed on the tread band 2 a plurality of grooves 9 so as to define a plurality of central blocks 10 which are arranged in succession along the circumferential development of the central region 6, a plurality of shoulder blocks 11 which are arranged in succession along the circumferential development of the shoulder regions 7 and a plurality of intermediate blocks 12 which are arranged in succession along the circumferential development of the central region 6 and which are interposed between the central blocks 10 and the shoulder blocks 11.

Continuous transverse grooves 9a, which extend through the tread band 2 from one axial end to the other in accordance with a generally S-like formation which may involve from 3 to 4 shoulder blocks 11 in a circumferential direction Z, are defined between the grooves 9.

The transverse grooves 9a have opposing end portions which delimit successive pairs of shoulder blocks 11 which extend in a substantially axial direction and which are connected to each other by a middle portion which delimits intermediate blocks 12 and central blocks 10 and extends in a direction which is more inclined with respect to the axial direction X.

The tread band 2 does not contain any continuous circumferential grooves.

The intermediate, central and shoulder blocks are arranged in such a manner that, in the axial direction X, an adjacent intermediate block 12 corresponds to each central block 10 and a pair of adjacent shoulder blocks 11 corresponds to each intermediate block 12.

The central blocks 10 are arranged in alternating succession of first central blocks 10a and second central blocks 10b, which mainly extend in a first longitudinal direction A and in a second longitudinal direction B, respectively.

The first and second longitudinal directions A and B are inclined at opposite sides and in a symmetrical manner with respect to the equatorial plane M at an angle of about 20°, as an absolute value, with respect to the circumferential direction Z.

With reference to the longitudinal direction A (or B), there are defined on the central blocks 10 a front side 13 and an opposing rear side 14 which are directed towards the direction of advancement Y and towards the opposite side, respectively.

The front side 13 of each central block 10a (or 10b) extends to a greater extent than its own rear side 14, having an extent between 150% and 250% of the extent of the rear side 14, as a function of the specific type of pitch to which the central block 10a (or 10b) belongs, and faces a lateral side 15 of a central block 10b (or 10a, respectively) which follows it.

Each intermediate block 12 extends in a longitudinal direction which is substantially parallel with the longitudinal direction A or B in which the central block 10 corresponding thereto extends.

Similarly to the central blocks 10, there are also defined on each intermediate block 12 a front side 16 which is directed in the direction of advancement Y and an opposing rear side 17 having a lesser extent than the front side 16.

The front side 16 of the intermediate block 12 faces the rear side 14 of a central block which follows the central block corresponding to the intermediate block 12.

There is further defined on each intermediate block 12 a lateral side 18 which faces the corresponding pair of shoulder blocks 11a, 11b and which shows a broken line progression, comprising a first portion 18a which is contiguous with the front side 16 of the intermediate block 12, and a second portion 18b which is spaced apart from and substantially parallel with the first portion 18a.

As set out above, each intermediate block 12 extends parallel with one of the two longitudinal directions A and B and the first and second portion 18a, 18b of each intermediate block 12 is inclined at an angle between about 70° and about 90° with respect to the other of the two longitudinal directions A or B.

Each pair of shoulder blocks 11 comprises a first shoulder block 11a and a second shoulder block 11b which both extend from the axial end 4a or 4b towards the central region 6 in a longitudinal direction C which is inclined with respect to the equatorial plane M at an angle of about 80°.

There are defined on each shoulder block 11a and 11b first ends 19a and 19b, respectively, which are axially internal and directed towards the central region 6, which face the rear side 17 of the corresponding intermediate block 12 and the lateral side 18 of the same intermediate block 12, respectively.

A transverse notch 12a extends through each intermediate block 12 and is substantially in axial alignment with a groove 9 separating the shoulder blocks 11a and 11b.

In the preferred embodiment illustrated here, the tyre 1 is a studded winter tyre and there are formed on each block of the tread band 2 sipes which are capable of retaining snow.

According to a preferred embodiment, each sipe is formed so as to define on each block portion separated therefrom a first surface which faces the other block portion and which extends from the top of the sipe as far as an intermediate depth thereof and a second surface which faces the other block portion and which is connected to the first surface and extends from the intermediate depth as far as the bottom of the sipe, where the first surface has a profile with a substantially rectilinear progression and the second surface has a profile with an undulating progression.

There are provided on the shoulder blocks 11 sipes 20a which extend parallel with the longitudinal direction C and the axially internal end portions thereof are formed inside respective cuts 21 which are formed at the longitudinal end 19a, 19b of the shoulder block 11 and which are open at a groove 9.

Furthermore, additional cuts 22 involving portions of sipes 20a are formed on the shoulder blocks 11, respectively.

There are provided on the intermediate blocks 12 sipes 20b which extend in a substantially perpendicular manner relative to the longitudinal direction A or B of the block and the end portions of which facing the corresponding central block 10 are formed inside respective cuts 23 which open at a groove 9 separating the central block 10 and the intermediate block 12.

A sipe 20b is further formed inside the transverse cut 12a.

There are provided on the central blocks 10 a first plurality of sipes 20c and a second plurality of sipes 20d.

The sipes 20c extend in a substantially perpendicular manner relative to the longitudinal direction A (or B) of the central block 10a (or 10b) on which they are formed while the sipes 20d have a curvilinear form, comprising a first portion 24 which is substantially perpendicular relative to that longitudinal direction A (or B) and a second portion 25 which is connected to the first portion 24 and which is substantially perpendicular relative to the longitudinal direction B (or A) of a following central block 10b (or 10a).

The sipes 20c are further formed in a portion of a central block 10a (or 10b) which is axially aligned with a central block 10b (or 10a) which precedes it, with reference to the direction of advancement Y, while the sipes 20d are formed in a portion of the central block 10a (or 10b) which is axially aligned with a central block 10b (or 10a) which follows it, always with reference to the direction of advancement Y. In other words, the sipes 20c are provided in a rear portion of the block 10 while the sipes 20d are provided in a front portion thereof.

The sipes 20c and 20d of each central block 10 are substantially aligned with the sipes 20b of an intermediate block 12 corresponding thereto. Furthermore, the end portions of the sipes 20c and 20d which face the intermediate block 12 corresponding thereto are formed inside respective cuts 26 which open at a groove 9 and which face the cuts 23 provided in the corresponding intermediate block 12.

Each pair of shoulder blocks 11, together with the intermediate block 12 and the central block 10 corresponding thereto, define a pitch of said tread band. Those pitches are arranged in differently alternating succession along the circumferential development of the tread band 2 and comprise two short pitch configurations S1 and S2 having a first circumferential dimension and two long pitch configurations L1, L2 having a second circumferential dimension which is greater than the first circumferential dimension.

Each pitch may further be ideally subdivided into two adjacent half-pitches which include one of the two shoulder blocks of the pair defining the pitch.

As set out above, the tyre 1 is preferably a studded winter tyre, for which there are preferably provided on the tread band 2 a plurality of studs which are generally designated 30. The studs 30 may be of any form suitable for bringing about grip on ice and/or compact and icy snow.

As described in greater detail above, the short pitch configurations S1 and S2 differ from each other substantially owing to the arrangement of the studs 30 on the blocks which form it and the same applies to the long pitch configurations L1 and L2.

A third long pitch or short pitch configuration which is not illustrated in the Figures may optionally be used once (or a limited number of times) on the tread band 2 in order to ensure that the tread band 2 is provided with the maximum number of studs provided for by the standards, without exceeding that number.

In the tyre 1, there are provided for each pitch on the tread band 2 at least two studs 30 which are axially staggered and, in particular for each short pitch S1, S2 or long pitch L1 or L2, there is provided a stud for each half-pitch.

There are provided on the short pitches S1 and S2 a stud in an edge position 31 and a stud in a middle position 32 and, with reference to the direction of advancement Y, the stud in an edge position 31 is positioned on the half-pitch which is more advanced with respect to the stud in the middle position 32.

There are also provided on the long pitches L1 and L2 a stud in an edge position 31 and a stud in a middle position 32 but, unlike the short pitches S1 and S2, in this case the stud in an edge position 31 is positioned on the half-pitch which is more retracted with respect to the stud in the middle position 32.

With the blocks configured in the manner set out in detail above, the tread band 2 has specific lateral rigidity values (measured in N/mm³) which can vary from location to location.

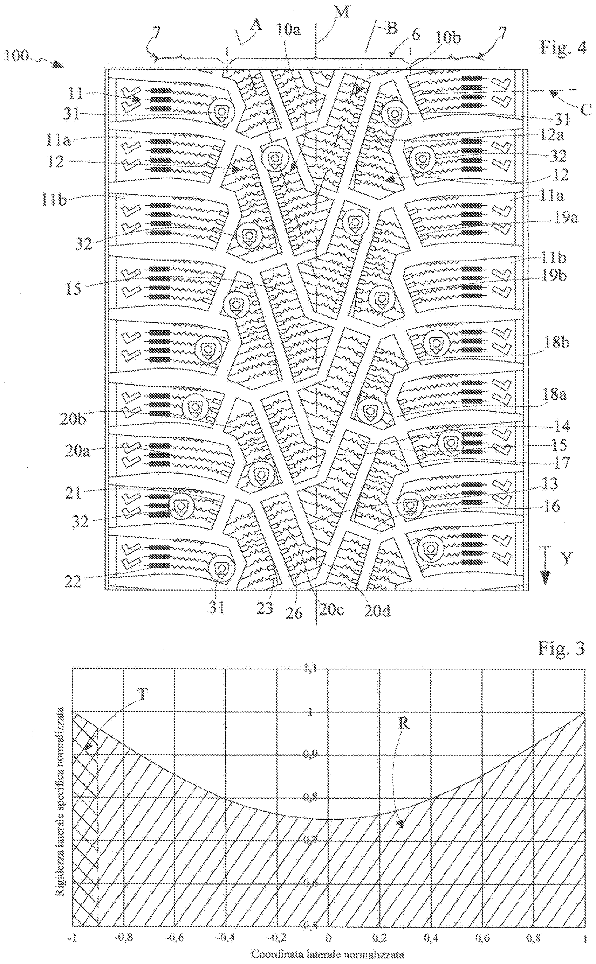

In particular, those values vary as a function of the distance of the location in question from the equatorial plane M, with decreasing values from the axial ends 4a and 4b, where they have a maximum value, as far as a minimum value reached in the region of the equatorial plane M. The configuration of the blocks on the tread band 2 is such that the progression of the specific lateral rigidity values as a function of the distance from the equatorial plane M is substantially continuous and progressive, as the graph in Figure 3 sets out, in which the axial spacing from the equatorial plane M (standardized with respect to the semi-width L of the tread band, for which the abscissa 0 corresponds to the locations of the tread band 2 belonging to the equatorial plane M and the abscissas -1 and 1 correspond to the axial ends 4a and 4b) is set out on the abscissa and there are set out on the ordinate the corresponding specific lateral rigidity values, which are also standardized with respect to the maximum value present at the above-mentioned axial ends 4a and 4b.

As may be noted from the graph of Figure 3 obtained for a measurement of the tyre 1 according to the invention, the minimum specific lateral rigidity value is about 75% of the maximum value.

Preferably, said minimum specific lateral rigidity value for the tyres according to the invention may vary from about 65% to about 85% of the maximum value.

The tyre 1 is mounted on a vehicle in such a manner that, during forward travel of the vehicle, it rotates about the axis of rotation X in the preferential rolling direction F.

During normal driving of the tyre 1 in the rectilinear direction, the total lateral rigidity of the tread band 2 is represented by the area R subtended by the curve of the standardized values of specific lateral rigidity defined in the graph of Figure 3.

When the tyre is driven round bends, a portion of the shoulder region 7 directed towards the centre of curvature of the bend is substantially unloaded so that the total value of lateral rigidity of the tread band 2 is reduced by a quantity equal to the area T subtended in the graph portion corresponding to the unloaded portion of shoulder region.

In consideration of the fact that the greatest values of specific lateral rigidity of the tread band 2 are per se in the region of the axial ends, a small unloaded portion of shoulder region also brings about a consistent loss of total lateral rigidity of the tread band 2, while additional unloading actions of shoulder regions influence the total lateral rigidity to a lesser extent.

Consequently, under conditions involving a bend being driven at relatively low speed, such as, for example, in the case of a snow-covered or ice-covered road surface, the tread band 2 tends to become deformed and to slightly give way, signalling to the driver the approach of a critical condition in terms of lateral adhesion to the ground which may allow him to bring about the due corrections in terms of driving.

In Figure 4, there is generally designated 100 a second embodiment of a tyre obtained in accordance with the method of the present invention.

In the tyre 100, elements similar to the tyre 1 described above are identified and referred to in Figure 4 by the same reference numerals.

The tyre 100 differs from the tyre 1 owing to a different formation of the sipes 20 which have a zigzag profile which extends from the tread surface.

A second difference involves a different configuration of the sipes 20d formed on the central blocks 10 which, rather than being curved, are rectilinear and substantially parallel with the sipes 20c.

According to a preferred embodiment, each sipe is formed so as to define on each block portion separated thereby a first surface which faces the other block portion and which extends from the top of the sipe as far as an intermediate depth thereof and a second surface which faces the other block portion and which is connected to the first surface and which extends from the intermediate depth as far as the bottom of the sipe, where the first surface has a profile having a progression which is substantially undulating while the second surface has a profile having a substantially rectilinear progression.

Another difference may be seen in a different configuration of the grooves 9 which, by maintaining their general progression, have a formation with a broken line rather than a curved line, as can be seen in Figures 2 and 4.

Naturally, a person skilled in the art could apply additional modifications and variants to the above-described invention in order to comply with specific and contingent application requirements, which variants and modifications are nevertheless included within the scope of protection as defined by the appended claims.

## Claims

1. Tyre (1) comprising a tread band (2) on which a plurality of grooves (9) are formed so as to define:
- a plurality of central blocks (10) which are arranged in succession along the circumferential development of a central region (6) of said tread band,
- a plurality of shoulder blocks (11) which are arranged in succession along the circumferential development of shoulder regions (7) which are defined on said tread band at the side axially opposite with respect to said central region,
- a plurality of intermediate blocks (12) which are arranged in succession along the circumferential development of said central region (6) between said central blocks and said shoulder blocks,
wherein for each central block (10) is identified an intermediate block (12) adjacent thereto and for each intermediate block (12) is identified a pair of shoulder blocks (11a, 11b) adjacent thereto,
wherein each intermediate block (12) extends in a longitudinal direction between a front side (16) directed towards a predefined direction of advancement (Y) of said tyre and an opposite rear side (17), and
wherein for each intermediate block are identified:
- a first shoulder block (11a) of said pair of shoulder blocks, having a first, axially internal, longitudinal end (19a) which faces towards said rear side (17) of said intermediate block and,
- a second shoulder block (11b) of said pair of shoulder blocks, having a first, axially internal, longitudinal end (19b) which faces towards a lateral side (18) of said intermediate block (12) opposite a central block (10) axially adjacent to said intermediate block,
**characterised in that** to each central block (10) there corresponds, in an axial direction (X) of said tyre, said intermediate block (12) adjacent thereto and **in that** to each intermediate block (12) there corresponds, in an axial direction (X) of said tyre, said pair of shoulder blocks (11a, 11b) adjacent thereto.

2. Tyre according to claim 1, wherein said central blocks (10) extend in a longitudinal direction (A, B) between a front side (13), directed in a direction of advancement (Y) of said tyre, and an opposite rear side (14), said front side extending by a measure at least 50% greater than said rear side.

3. Tyre according to any one of the preceding claims, wherein each shoulder block (11) extends from an axial end (4a, 4b) of said tread band towards said central region (6) in a longitudinal direction (C) and there are formed on each shoulder block a plurality of sipes (20a) which extend parallel with said longitudinal direction and wherein an axially external portion of said sipes (20a) is formed inside respective cuts (22) which are formed in said shoulder block (11) or an axially internal end portion of said sipes (20a) is formed inside respective cuts (21) which are formed in said shoulder block (11) and which open at a groove delimiting said shoulder block.

4. Tyre according to any one of the preceding claims, wherein each intermediate block (12) extends in a longitudinal direction (A, B) and there are formed on each intermediate block a plurality of sipes (20b) which extend perpendicularly to said longitudinal direction, the end portions of said sipes (20b) which face a corresponding central block (10) being formed inside respective cuts (23) which are open at a groove (9) which separates said central block and said intermediate block.

5. Tyre according to any one of the preceding claims, wherein a transverse notch (12a) extends through each intermediate block (12).

6. Tyre according to claim 5, wherein said transverse notch (12a) is substantially in axial alignment with a groove (9) which separates the shoulder blocks (11a, 11b) of said pair.

7. Tyre according to any one of the preceding claims, wherein each central block (10) extends in a longitudinal direction (A, B) and on each central block are formed a first plurality of sipes (20c) which extend perpendicularly to said longitudinal direction and a second plurality of sipes (20d) of curvilinear form, each sipe of said second plurality comprising a first portion (24) substantially perpendicular to said longitudinal direction (A, B) and a second portion (25) connected to said first portion and substantially perpendicular to the longitudinal direction of a central block which follows said central block.

8. Tyre according to claim 7, wherein the end portions of said sipes (20c, 20d) facing a corresponding intermediate block are formed inside respective cuts (26) which open in a groove (9) which separates said central block and said intermediate block.

9. Tyre according to any one of the preceding claims, wherein each pair of said shoulder blocks (11a, 11b), together with said intermediate block (12) and said central block (10) corresponding thereto, define a pitch (S1, S2, L1, L2) of said tread band and, for each pitch, at least two axially staggered studs (31, 32) are provided on said tread band.

10. Tyre according to claim 9, wherein said pitches are provided in differently alternating succession along the circumferential development of said tread band and comprise at least one short pitch (S1, S2), having a first circumferential dimension, and at least one long pitch (L1, L2), having a second circumferential dimension greater than said first circumferential dimension, a stud (31, 32) for each half-pitch of said short pitch being provided at said short pitch.

11. Tyre according to claim 10, wherein there are provided at said short pitch a stud in an edge position (31) and a stud in a middle position (32).

12. Tyre according to claim 11, wherein, with reference to a predefined direction of advancement (Y) of said tyre, said stud in an edge position (31) is at a half-pitch which is more advanced with respect to said stud in a middle position (32).

13. Tyre according to any one of claims 9 to 12, wherein said pitches are provided in a differently alternating succession along the circumferential development of said tread band and comprise at least one short pitch (S1, S2) having a first circumferential dimension and at least one long pitch (L1, L2) having a second circumferential dimension greater than said first circumferential dimension, at least one stud (31, 32) for each half-pitch of said long pitch being provided at said long pitch (L1, L2).

14. Tyre according to claim 13, wherein a stud in an edge position (31) and a stud in a middle position (32) are provided at said long pitch.

15. Tyre according to claim 14, wherein, with reference to a predefined direction of advancement (Y) of said tyre, said stud in an edge position (31) is at a half-pitch which is more retracted with respect to said stud in a middle position (32).

## Patentansprüche

1. Reifen (1) umfassend einen Laufflächenring (2), an welchem eine Vielzahl von Nuten (9) ausgebildet ist, um zu definieren:
- eine Vielzahl von Zentralblöcken (10), die aufeinanderfolgend entlang der Umfangserstreckung eines Zentralbereichs (6) des Laufflächenrings angeordnet sind,
- eine Vielzahl von Schulterblöcken (11), die aufeinanderfolgend entlang der Umfangserstreckung von Schulterregionen (7) angeordnet sind, die an dem Laufflächenring auf der dem Zentralbereich axial gegenüberliegenden Seite definiert sind,
- eine Vielzahl von Zwischenblöcken (12), die in Abfolge entlang der Umfangserstreckung des Zentralbereichs (6) zwischen den Zentralblöcken und den Schulterblöcken angeordnet sind,
wobei für jeden Zentralblock (10) ein zu diesem benachbarter Zwischenblock (12) identifiziert ist, und für jeden Zwischenblock (12) ein zu diesem benachbartes Paar von Schulterblöcken (11a, 11b) identifiziert ist,
wobei jeder Zwischenblock (12) sich in einer Längsrichtung zwischen einer Vorderseite (16), die zu einer vordefinierten Vorschubrichtung (Y) des Reifens hin gerichtet ist, und einer gegenüberliegenden Rückseite (17) erstreckt, und
wobei für jeden Zwischenblock identifiziert ist:
- ein erster Schulterblock (11a) des Paars von Schulterblöcken, mit einem ersten, axial inneren länglichen Ende (19a), das zu der Rückseite (17) des Zwischenblocks hin weist, und,
- ein zweiter Schulterblock (11b) des Paars von Schulterblöcken, mit einem ersten, axial inneren länglichen Ende (19b), das zu einer seitlichen Seite (18) des Zwischenblocks (12) gegenüber einem Zentralblock (10) axial benachbart zu dem Zwischenblock hin weist,
**dadurch gekennzeichnet, dass** jedem Zentralblock (10) in einer axialen Richtung (X) des Reifens der dazu benachbarte Zwischenblock (12) entspricht, und dass jedem Zwischenblock (12) in einer axialen Richtung (X) des Reifens das dazu benachbarte Paar von Schulterblöcken (11a, 11b) entspricht.

2. Reifen nach Anspruch 1, wobei die Zentralblöcke (10) sich in einer Längsrichtung (A, B) zwischen einer Vorderseite (13), die in eine Vorschubrichtung (Y) des Reifens gerichtet ist, und einer gegenüberliegenden Rückseite (14) erstreckt, wobei sich die Vorderseite in einem Maß erstreckt, das zumindest 50 % größer ist als die Rückseite.

3. Reifen nach einem der vorhergehenden Ansprüche, wobei jeder Schulterblock (11) sich von einem axialen Ende (4a, 4b) des Laufflächenrings zu dem Zentralbereich (6) hin in einer Längsrichtung (C) erstreckt. und an jedem Schulterblock eine Vielzahl von Lamellen (20a) ausgebildet ist, die sich parallel zu der Längsrichtung erstrecken, und wobei ein axial äußerer Abschnitt der Lamellen (20a) innerhalb jeweiliger Schnitte (22) ausgebildet ist, die in dem Schulterblock (11) ausgebildet sind, oder ein axial innerer Endabschnitt der Lamellen (20a) innerhalb jeweiliger Schnitte (21) ausgebildet ist, die in dem Schulterblock (11) ausgebildet sind und die sich an einer Nut öffnen, die den Schulterblock begrenzt.

4. Reifen nach einem der vorhergehenden Ansprüche, wobei jeder Zwischenblock (12) sich in einer Längsrichtung (A, B) erstreckt und an jedem Zwischenblock eine Vielzahl von Lamellen (20b) ausgebildet ist, die sich senkrecht auf die Längsrichtung erstrecken, und, wobei die Endabschnitte der Lamellen (20b), die zu einem entsprechenden Zentralblock (10) weisen, innerhalb jeweiliger Schnitte (23) ausgebildet sind, die an einer Nut (9), die den Zentralblock und den Zwischenblock trennt, offen sind.

5. Reifen nach einem der vorhergehenden Ansprüche, wobei sich eine querverlaufende Kerbe (12a) durch jeden Zwischenblock (12) erstreckt.

6. Reifen nach Anspruch 5, wobei die querverlaufende Kerbe (12a) im Wesentlichen in axialer Ausrichtung mit einer Nut (9) steht, welche die Schulterblöcke (11a, 11b) des Paars trennt.

7. Reifen nach einem der vorhergehenden Ansprüche, wobei jeder zentrale Block (10) sich in einer Längsrichtung (A, B) erstreckt, und an jedem zentrale Block eine erste Vielzahl von Lamellen (20c) ausgebildet ist, die sich senkrecht auf die Längsrichtung erstrecken, sowie eine zweite Vielzahl von Lamellen (20d) mit kurvenförmiger Gestalt, wobei jede Lamelle der zweiten Vielzahl einen ersten Abschnitt (24) im Wesentlichen senkrecht auf die Längsrichtung (A, B) und einen zweiten Abschnitt (25) umfasst, der mit dem ersten Abschnitt verbunden ist und im Wesentlichen senkrecht auf die Längsrichtung eines Zentralblocks steht, der auf den Zentralblock folgt.

8. Reifen nach Anspruch 7, wobei die Endabschnitte der Lamellen (20c, 20d), die zu einem entsprechenden Zwischenblock hin weisen, innerhalb jeweiliger Schnitte (26) ausgebildet sind, die sich in eine Nut (9) öffnen, die den Zentralblock und den Zwischenblock trennt.

9. Reifen nach einem der vorhergehenden Ansprüche, wobei jedes Paar der Schulterblöcke (11a, 11b), zusammen mit dem Zwischenblock (12) und dem Zentralblock (10), die ihm entsprechen, eine Teilung (S1, S2, L1, L2) des Laufflächenrings definiert, und für jede Teilung zumindest zwei axial versetzte Spikes (31, 32) an dem Laufflächenring vorgesehen sind.

10. Reifen nach Anspruch 9, wobei die Teilungen in verschieden abwechselnder Abfolge entlang der Umfangserstreckung des Laufflächenrings vorgesehen sind und zumindest eine kurze Teilung (S1, S2), die eine erste Umfangsdimension aufweist, und zumindest eine lange Teilung (L1, L2) umfasst, die eine zweite Umfangsdimension aufweist, die größer ist als die erste Umfangsdimension, wobei ein Spike (31, 32) für jede Halbteilung der kurzen Teilung an der kurzen Teilung vorgesehen ist.

11. Reifen nach Anspruch 10, wobei an der kurzen Teilung ein Spike in einer Randposition (31) und ein Spike in einer Mittelposition (32) vorgesehen sind.

12. Reifen nach Anspruch 11, wobei in Bezug auf eine vordefinierte Vorschubrichtung (Y) des Reifens der Spike in einer Randposition (31) sich an einer Halbteilung befindet, die in Bezug auf den Spike in einer Mittelposition (32) weiter vorgerückt ist.

13. Reifen nach Anspruch 9 bis 12, wobei die Teilungen in einer verschieden abwechselnden Abfolge entlang der Umfangserstreckung des Laufflächenrings vorgesehen sind und zumindest eine kurze Teilung (S1, S2), die eine erste Umfangsdimension aufweist, und zumindest eine lange Teilung (L1, L2) umfasst, die eine zweite Umfangsdimension aufweist, die größer ist als die erste Umfangsdimension, wobei zumindest ein Spike (31, 32) für jede Halbteilung der langen Teilung an der langen Teilung (L1, L2) vorgesehen ist.

14. Reifen nach Anspruch 13, wobei an der langen Teilung ein Spike in einer Randposition (31) und ein Spike in einer Mittelposition (32) vorgesehen sind.

15. Reifen nach Anspruch 14, wobei in Bezug auf eine vordefinierte Vorschubrichtung (Y) des Reifens der Spike in einer Randposition (31) sich an einer Halbteilung befindet, die in Bezug auf den Spike in einer Mittelposition (32) weiter zurückgezogen ist.

## Revendications

1. Pneu (1) comprenant une bande de roulement (2) sur laquelle une pluralité de rainures (9) sont formées de manière à définir :
- une pluralité de blocs centraux (10) qui sont agencés successivement le long du développement circonférentiel d'une région centrale (6) de ladite bande de roulement,
- une pluralité de blocs d'épaulement (11) qui sont agencés successivement le long du développement circonférentiel de régions d'épaulement (7) qui sont définies sur ladite bande de roulement sur le côté axialement opposé par rapport à ladite région centrale,
- une pluralité de blocs intermédiaires (12) qui sont agencés successivement le long du développement circonférentiel de ladite région centrale (6) entre lesdits blocs centraux et lesdits blocs d'épaulement,
dans lequel, pour chaque bloc central (10), un bloc intermédiaire (12) adjacent à celui-ci est identifié et pour chaque bloc intermédiaire (12), une paire de blocs d'épaulement (11a, 11b) adjacents à celui-ci est identifiée,
dans lequel chaque bloc intermédiaire (12) s'étend dans une direction longitudinale entre un côté avant (16) dirigé vers une direction d'avancement (Y) prédéfinie dudit pneu et un côté arrière opposé (17), et
dans lequel pour chaque bloc intermédiaire on identifie :
- un premier bloc d'épaulement (11a) de ladite paire de blocs d'épaulement, ayant une première extrémité longitudinale axialement interne (19a) qui est tournée vers ledit côté arrière (17) dudit bloc intermédiaire et,
- un deuxième bloc d'épaulement (11b) de ladite paire de blocs d'épaulement, ayant une première extrémité longitudinale axialement interne (19b) qui est tournée vers un côté latéral (18) dudit bloc intermédiaire (12) opposé à un bloc central (10) axialement adjacent audit bloc intermédiaire,
**caractérisé en ce que** à chaque bloc central (10) correspond, dans une direction axiale (X) dudit pneu, ledit bloc intermédiaire (12) adjacent à celui-ci et **en ce que** à chaque bloc intermédiaire (12) correspond, dans une direction axiale (X) dudit pneu, ladite paire de blocs d'épaulement (11a, 11b) adjacents à celui-ci.

2. Pneu selon la revendication 1, dans lequel lesdits blocs centraux (10) s'étendent dans une direction longitudinale (A, B) entre un côté avant (13), dirigé dans une direction d'avancement (Y) dudit pneu, et un côté arrière opposé (14), ledit côté avant s'étendant d'une mesure supérieure d'au moins 50% audit côté arrière.

3. Pneu selon l'une quelconque des revendications précédentes, dans lequel chaque bloc d'épaulement (11) s'étend à partir d'une extrémité axiale (4a, 4b) de ladite bande de roulement vers ladite région centrale (6) dans une direction longitudinale (C) et sur chaque bloc d'épaulement sont formées une pluralité de lamelles (20a) qui s'étendent parallèlement à ladite direction longitudinale et où une partie axialement externe desdites lamelles (20a) est formée à l'intérieur de découpures respectives (22) qui sont formées dans ledit bloc d'épaulement (11) ou une partie d'extrémité axialement interne desdites lamelles (20a) est formée à l'intérieur de découpures respectives (21) qui sont formées dans ledit bloc d'épaulement (11) et qui s'ouvrent au niveau d'une rainure délimitant ledit bloc d'épaulement.

4. Pneu selon l'une quelconque des revendications précédentes, dans lequel chaque bloc intermédiaire (12) s'étend dans une direction longitudinale (A, B) et sur chaque bloc intermédiaire sont formées une pluralité de lamelles (20b) qui s'étendent perpendiculairement à ladite direction longitudinale, les parties d'extrémité desdites lamelles (20b) qui font face à un bloc central correspondant (10) étant formées à l'intérieur de découpures respectives (23) qui sont ouvertes au niveau d'une rainure (9) qui sépare ledit bloc central et ledit bloc intermédiaire.

5. Pneu selon l'une quelconque des revendications précédentes, dans lequel une encoche transversale (12a) s'étend à travers chaque bloc intermédiaire (12).

6. Pneu selon la revendication 5, dans lequel ladite encoche transversale (12a) est essentiellement en alignement axial avec une rainure (9) qui sépare les blocs d'épaulement (11a, 11b) de ladite paire.

7. Pneu selon l'une quelconque des revendications précédentes, dans lequel chaque bloc central (10) s'étend dans une direction longitudinale (A, B) et sur chaque bloc central sont formées une première pluralité de lamelles (20c) qui s'étendent perpendiculairement à ladite direction longitudinale et une deuxième pluralité de lamelles (20d) de forme curviligne, chaque lamelle de ladite deuxième pluralité comprenant une première partie (24) essentiellement perpendiculaire à ladite direction longitudinale (A, B) et une deuxième partie (25) reliée à ladite première partie et essentiellement perpendiculaire à la direction longitudinale d'un bloc central qui suit ledit bloc central.

8. Pneu selon la revendication 7, dans lequel les parties d'extrémité desdites lamelles (20c, 20d) faisant face à un bloc intermédiaire correspondant sont formées à l'intérieur de découpures respectives (26) qui s'ouvrent dans une rainure (9) qui sépare ledit bloc central et ledit bloc intermédiaire.

9. Pneu selon l'une quelconque des revendications précédentes, dans lequel chaque paire desdits blocs d'épaulement (11a, 11b), conjointement avec ledit bloc intermédiaire (12) et ledit bloc central (10) correspondant à celui-ci, définissent un pas (S1, S2, L1, L2) de ladite bande de roulement et, pour chaque pas, au moins deux crampons (31, 32) décalés axialement sont prévus sur ladite bande de roulement.

10. Pneu selon la revendication 9, dans lequel lesdits pas sont prévus en succession différemment alternée le long du développement circonférentiel de ladite bande de roulement et comprennent au moins un pas court (S1, S2) ayant une première dimension circonférentielle, et au moins un pas long (L1, L2), ayant une deuxième dimension circonférentielle supérieure à ladite première dimension circonférentielle, un crampon (31, 32) pour chaque demi-pas dudit pas court étant prévu au niveau dudit pas court.

11. Pneu selon la revendication 10, dans lequel, au niveau dudit pas court, un crampon dans une position de bord (31) et un crampon dans une position médiane (32) sont prévus.

12. Pneu selon la revendication 11, dans lequel, en référence à une direction d'avancement (Y) prédéfinie dudit pneu, ledit crampon dans une position de bord (31) se trouve au niveau d'un demi-pas qui est plus avancé par rapport audit crampon dans une position médiane (32).

13. Pneu selon l'une quelconque des revendications 9 à 12, dans lequel lesdits pas sont prévus en succession différemment alternée le long du développement circonférentiel de ladite bande de roulement et comprennent au moins un pas court (S1, S2) ayant une première dimension circonférentielle et au moins un pas long (L1, L2) ayant une deuxième dimension circonférentielle supérieure à ladite première dimension circonférentielle, au moins un crampon (31, 32) pour chaque demi-pas dudit pas long étant prévu au niveau dudit pas long (L1, L2).

14. Pneu selon la revendication 13, dans lequel un crampon dans une position de bord (31) et un crampon dans une position médiane (32) sont prévus au niveau dudit pas long.

15. Pneu selon la revendication 14, dans lequel, en référence à une direction d'avancement (Y) prédéfinie dudit pneu, ledit crampon dans une position de bord (31) se trouve au niveau d'un demi-pas qui est plus rétracté par rapport audit crampon dans une position médiane (32).
